# EUROPEAN PATENT APPLICATION

(11) **EP 2 120 278 A1**
(43) Date of publication of application: **18.11.2009**
(21) Application number: 08790832.3
(22) Date of filing: 03.07.2008
(51) Int. Cl.: H01M 8/24, H01M 8/10

(54) **FUEL CELL**

(30) Priority: 10.07.2007 JP 2007181266
(71) Applicant: Seiko Instruments Inc., Chiba-shi Chiba 261-8507 (JP)
(72) Inventor: OZAKI, Toru, Chiba-shi Chiba 261-8507 (JP); IWASAKI, Fumiharu, Chiba-shi Chiba 261-8507 (JP); YUZURIHARA, Kazutaka, Chiba-shi Chiba 261-8507 (JP); SARATA, Takafumi, Chiba-shi Chiba 261-8507 (JP); TAMACHI, Tsuneaki, Chiba-shi Chiba 261-8507 (JP); YANASE, Norimasa, Chiba-shi Chiba 261-8507 (JP); ISHISONE, Noboru, Chiba-shi Chiba 261-8507 (JP)
(74) Representative: Cloughley, Peter Andrew
(86) International application number: PCT/JP2008/062028
(87) International publication number: WO 2009/008317

(57) **Abstract**

Hydrogen supplied from an introduction port (22) is diffused in a first space (15), which is a first buffer section. Thereafter, it is sent to a first space (15), which is a second buffer section, through a communication port (23), and is radially diffused in the first space (15) so that the flow rate is made uniform. Then, it is sent to small-openings (24) formed on a same circumference (S), so that the hydrogen can be supplied to each of the cell units evenly.

## Description

### TECHNICAL FIELD

The present invention relates to a fuel cell that supplies an anode fluid from a manifold to each of the cell units in a cell stack.

### BACKGROUND ART

Due to a growing concern about energy issues, there has been a demand for clean emission power sources with higher energy density. A fuel cell is an electric power generator having an energy density several times that of conventional batteries, and it has characteristics such as high energy efficiency and low contents of, or free of, nitrogen oxides and sulfur oxides in emission gas. For this reason, the fuel cell is a very effective device that meets the requirements for a next generation power source device.

A cell of the fuel cell has an anode side catalyst (anode) and a cathode side catalyst (cathode) on opposite sides of a solid polymer electrolyte membrane as an electrolyte membrane. The cell and a separator, in which an anode fluid passage and a cathode fluid passage are formed in a back-to-back relationship, are disposed alternately, so that a cell unit is formed. A plurality of such cell units are stacked, whereby a cell stack is formed. The fuel cell with such a stack structure is furnished with a manifold for distributing fuel uniformly to each of the cell units to perform supply of the fuel uniformly over the cell stack, so that the fuel from the manifold is supplied to each of the cell units.

When the fuel supply to the cell units of the cell stack becomes non-uniform, variations in the output occur between the cell units. Consequently, the efficiency in power generation is lowered, and the output from the cell stack as a whole is affected by the output from the low output cell. For this reason, the manifold is required to have highly uniform distribution capability as to the fuel supply to each of the cell units in the cell stack.

In view of such circumstances, various techniques have been proposed to supply fuel to each of the cell units in the cell stack uniformly (JP-A-9-161828). Here, the manifold for supplying fuel has a space (second space) for diffusion, which is adjacent to the cell stack, and a first space to which a hydrogen rich gas as the fuel is supplied. The hydrogen rich gas supplied to the first space is sent to the second space via a through hole, diffused in the second space, and supplied to each of the cell units.

Because the hydrogen rich gas is diffused in the second space, variation in the supply amount between a cell that is near the through hole and a cell unit that is away from the through hole is reduced so that the hydrogen rich gas can be supplied evenly to the cell units over the entire cell stack.

### PROBLEMS THAT THE INVENTION IS TO SOLVE

With the conventional technique, however, the proportion of the volumetric capacity of the second space needs to be large relative to the total volumetric capacity of the first space and the second space since the hydrogen rich gas needs to be diffused in the second space. Accordingly, unless a certain distance from the through hole to the cell units is ensured, variations in the supply amount occur depending on the positional relationship between the through hole and each of the cell units. Thus, it has been inevitable to make the size of the manifold large in order to supply the hydrogen rich gas evenly to each of the cell units.

The invention has been accomplished in view of the foregoing circumstances. It is an object of the invention to provide a fuel cell that can supply an anode fluid to each of the cell units evenly even when the size of the manifold is reduced.

### MEANS FOR SOLVING THE PROBLEMS

In order to accomplish the foregoing object, a first feature of the invention is a fuel cell comprising: a cell in which an anode and a cathode are joined with an electrolyte membrane interposed therebetween; a cell stack in which a plurality cell units are stacked, each of the cell units comprising the cell and a separator having an anode fluid passage; and a manifold for supplying an anode fluid to a location to which the anode fluid passage of the cell unit is directed, the fuel cell being **characterized in that**: the manifold comprises a top plate having an introduction port for introducing the anode fluid, and a bottom plate having a plurality of small-openings directed to the anode fluid passage, the bottom plate also having a passage space for the anode fluid formed on an upper face thereof and between the upper face thereof and an inner face of the top plate; the small-openings are provided on a same circumference having a projected portion of the introduction port as its center; and the anode fluid supplied from the introduction port is allowed to contact the projected portion in the upper face of the bottom plate so as to lower the flow rate, and the anode fluid whose flow rate has been lowered is allowed to diffuse in radial directions to be distributed to the small-openings.

According to such a feature, the anode fluid supplied from the introduction port is contacted with the projected portion in the upper face of the bottom plate to lower the flow rate, and the anode fluid whose flow rate has been lowered is distributed to the small-openings disposed on a concentric circle having the projected portion as its center. Therefore, the anode fluid can be distributed to the plurality of small-openings within a limited passage space, and the anode fluid can be supplied evenly to each of the cell units even when the size of the manifold is reduced.

A second feature of the invention is **characterized in that** the small-openings are provided on a same circumference so that one of the small-openings corresponds to a respective one of the plurality of cell units.

Owing to such a feature, the anode fluid can be distributed to all the cell units uniformly.

A third feature of the invention is characterized to be the fuel cell in which the small-openings are provided at regular intervals with respect to a center line of the circumference that extends in an aligning direction of the plurality of cell units and mutually across the center line.

Owing to such a feature, the anode fluid can be distributed to all the cell units reliably.

A fourth feature of the invention is characterized to be the fuel cell in which the small-openings are provided on the same circumference so that a plurality of the small-openings correspond to a respective one of the plurality of cell units.

Owing to such a feature, the anode fluid can be distributed to all the cell units uniformly and reliably.

A fifth feature of the invention is characterized to be the fuel cell in which the small-openings are provided in line symmetry with respect to a center line of the circumference concerning an aligning direction of the plurality of cell units and in point symmetry with respect to a center point of the circumference, and a plurality of the small-openings are provided respectively to each one of the cell units at regular intervals with respect to the center line.

Owing to such a feature, the anode fluid can be distributed to all the cell units uniformly and more reliably.

A sixth feature of the invention is characterized to be the fuel cell in which a fluid blocking wall is provided in the passage space that is outside the small-openings having the projected portion as its center.

Owing to such a feature, the anode fluid is inhibited from flowing outside by the fluid blocking wall. As a result, the supply pressure is provided sufficiently, and the anode fluid can be supplied to the small-openings more reliably.

In order to accomplish the foregoing object, a seventh feature of the invention is a fuel cell comprising: a cell in which an anode and a cathode are joined with an electrolyte membrane interposed therebetween; a cell stack in which a plurality cell units are stacked, each of the cell units comprising the cell and a separator having an anode fluid passage; and a manifold for supplying an anode fluid to a location to which the anode fluid passage of the cell unit is directed, the fuel cell being **characterized in that**: the manifold comprises a top plate having an introduction port for introducing the anode fluid, and a bottom plate having a plurality of small-openings directed to the anode fluid passage, the bottom plate also having a passage space for the anode fluid formed on an upper face thereof and between the upper face thereof and an inner face of the top plate, and a partition plate, for dividing the passage space into a first space on the top plate side and a second space on the bottom plate side, having a second introduction port at a location different from a projected portion of the introduction port; the small-openings are provided on a same circumference having a second projected portion of the second introduction port as its center; and the anode fluid supplied from the second introduction port is allowed to contact the second projected portion in the upper face of the bottom plate so as to lower the flow rate, and the anode fluid whose flow rate has been lowered is allowed to diffuse in radial directions to be distributed to the small-openings.

According to such a feature, the flow rate of the anode fluid supplied from the introduction port is lowered in the first space, and the anode fluid whose flow rate has been lowered is allowed to pass through the second introduction port and contacted with the second projected portion in the upper face of the bottom plate to further lower the flow rate. The anode fluid whose flow rate has been lowered sufficiently is distributed to the small-openings disposed on a concentric circle having the projected portion as its center. Therefore, the anode fluid can be distributed to the plurality of small-openings within a limited passage space, and the anode fluid can be supplied evenly to each of the cell units, which comprises the cell and the separator, even when the size of the manifold is reduced.

An eighth feature of the invention is characterized to be the fuel cell in which a flow passage area of the second introduction port is greater than a flow passage area of the introduction port.

Owing to such a feature, deceleration of the anode fluid is promoted when it passes through the second introduction port, which has a large flow passage area.

A ninth feature of the invention is characterized to be the fuel cell in which the small-openings are provided on a same circumference so that one of the small-openings corresponds to a respective one of the plurality of cell units.

Owing to such a feature, the anode fluid can be distributed to all the cell units uniformly.

A tenth feature of the invention is characterized to be the fuel cell in which the small-openings are provided at regular intervals with respect to a center line of the circumference that extends in an aligning direction of the plurality of cell units and mutually across the center line.

Owing to such a feature, the anode fluid can be distributed to all the cell units reliably.

An eleventh feature of the invention is characterized to be the fuel cell in which the small-openings are provided on the same circumference so that a plurality of the small-openings correspond to a respective one of the plurality of cell units.

Owing to such a feature, the anode fluid can be distributed to all the cell units uniformly and reliably.

A twelfth feature of the invention is characterized to be the fuel cell in which the small-openings are provided in line symmetry with respect to a center line of the circumference concerning an aligning direction of the plurality of cell units and in point symmetry with respect to a center point of the circumference, and a plurality of the small-openings are provided respectively to each one of the cell units at regular intervals with respect to the center line.

Owing to such a feature, the anode fluid can be distributed to all the cell units uniformly and more reliably.

A thirteenth feature of the invention is characterized to be the fuel cell in which a fluid blocking wall is provided in the passage space that is outside the small-openings having the projected portion as its center.

Owing to such a feature, the anode fluid is inhibited from flowing outside by the fluid blocking wall. As a result, the supply pressure is provided sufficiently, and the anode fluid can be supplied to the small-openings more reliably.

### BRIEF DESCRIPTION OF THE DRAWINGS

[Fig. 1] Fig. 1 is an external appearance view of a fuel cell according to a first embodiment of the invention.
[Fig. 2] Fig. 2 is an exploded perspective view of an external manifold.
[Fig. 3] Fig. 3 is an external appearance view of a top plate.
[Fig. 4] Fig. 4 is an external appearance view of a partition plate.
[Fig. 5] Fig. 5 is an external appearance view of an inner face of a bottom plate.
[Fig. 6] Fig. 6 is an external appearance view of the inner face of the bottom plate, which shows the state of the fuel flowing on the bottom plate.
[Fig. 7] Fig. 7 is an external appearance view of an inner face of a bottom plate of an external manifold according to a second embodiment of the invention.
[Fig. 8] Fig. 8 is an external appearance view of an inner face of a bottom plate of an external manifold according to a third embodiment of the invention.

### BEST MODE FOR CARRYING OUT THE INVENTION

### (First Embodiment)

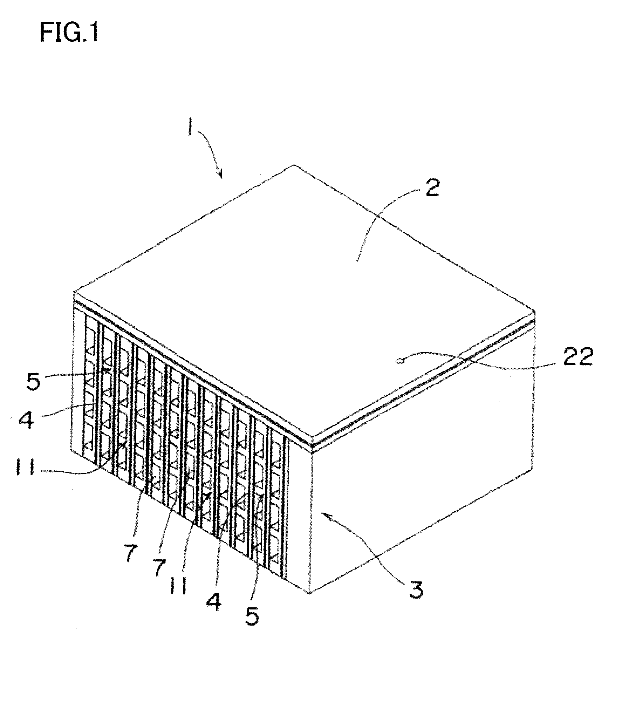

A first embodiment of the invention is described with reference to Figs. 1 to 6.

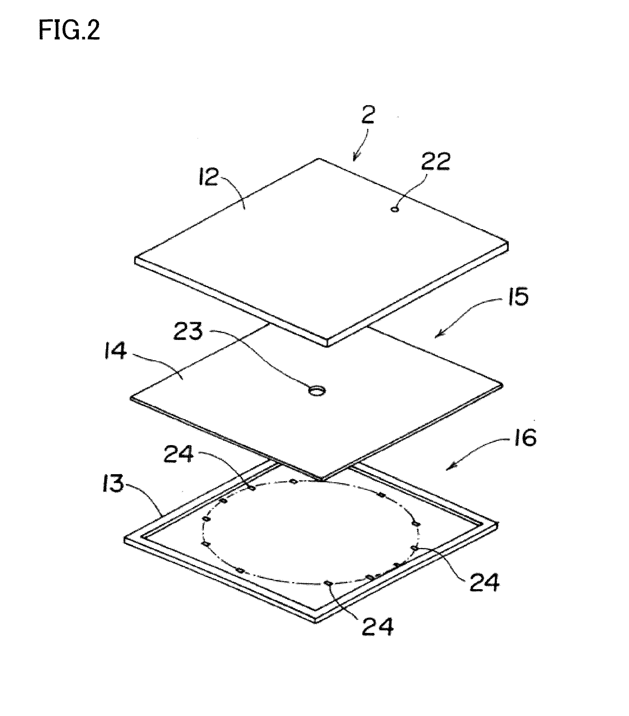

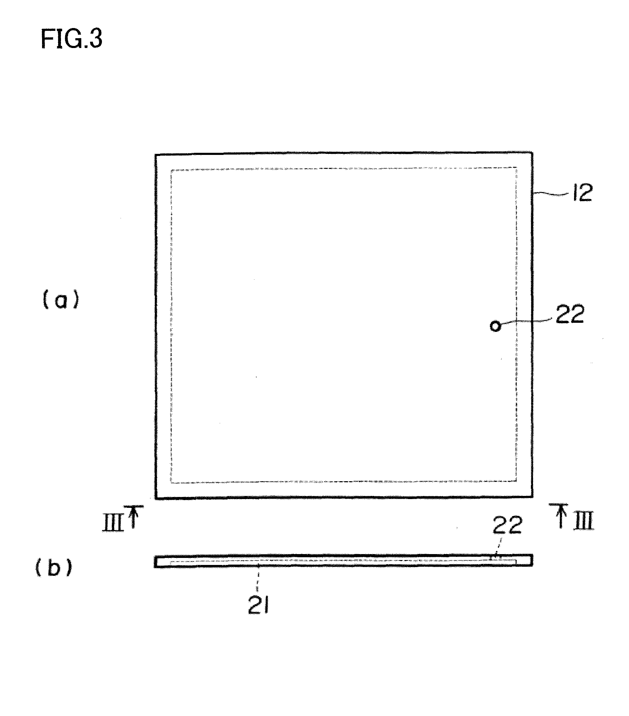

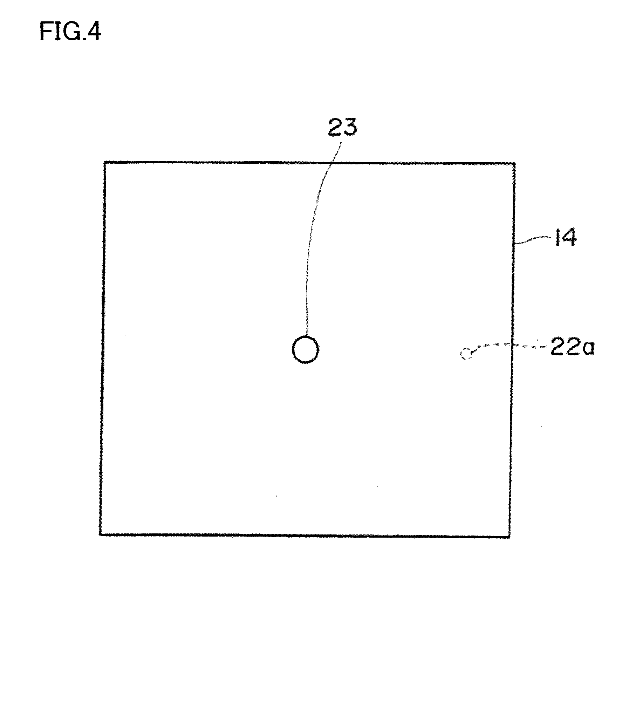

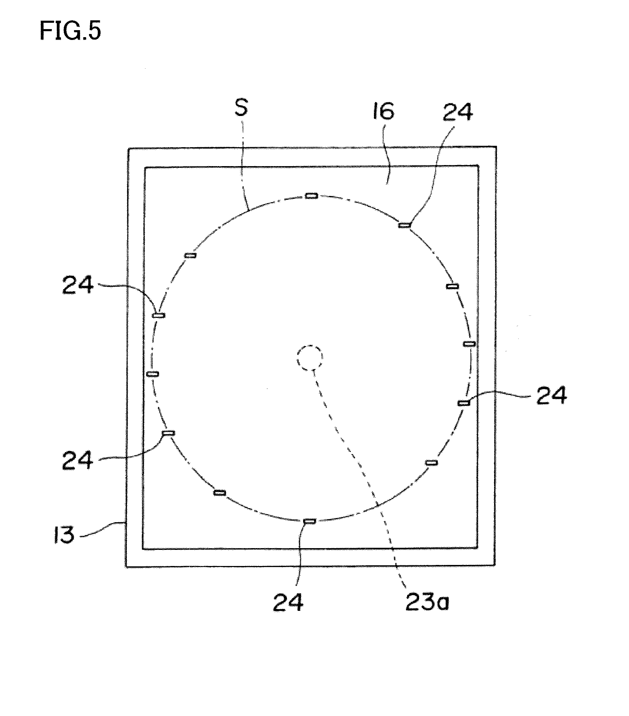

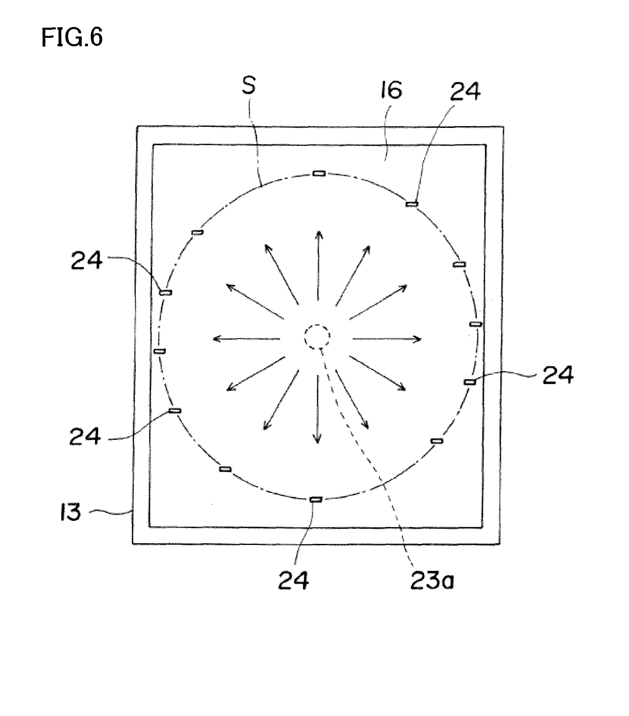

Fig. 1 shows the external appearance of a fuel cell according to a first embodiment of the invention, Fig. 2 shows an exploded perspective of an external manifold, and Fig. 3 shows the external appearance of a top plate. Fig. 3(a) is a plan view of the top plate, and Fig. 3(b) shows a cross section taken along the line III-III in Fig. 3(a). Fig. 4 shows the external appearance of a partition plate, Fig. 5 is the external appearance of an inner surface of a bottom plate, and Fig. 6 shows the state of the fuel flowing on the bottom plate.

As shown in the drawings, a fuel cell 1 of this embodiment has an external manifold 2 as a manifold to which fuel (hydrogen) as an anode fluid is fed, and the hydrogen is supplied from the external manifold 2 to a cell stack 3. For example, a fuel supply unit, not shown, for supplying hydrogen obtained from a hydrogen storage alloy or the like is connected to the external manifold 2, and a control circuit, not shown, is connected to a power generation unit of the cell stack 3.

A cell 4 of the cell stack 3 is configured to be a membrane-electrode assembly in which an anode side catalyst (anode) and a cathode side catalyst (cathode) are provided on opposite sides of a solid polymer electrolyte membrane as an electrolyte membrane. The cell 4 and a separator 5, in which an anode fluid passage (not shown) and a cathode fluid passage 7 are formed in a back-to-back relationship, are staked alternately to form a cell unit 11, and a plurality of cell units 11 are stacked to form the cell stack 3. The fuel cell 1 with such a stack structure has the external manifold 2 in order to distribute hydrogen uniformly to the anode fluid passage of the separator 5 stacked on each of the cell units 11 and to perform supply of the hydrogen uniformly over the cell stack 3.

It should be noted that the separator 5 is not limited to such a shape in which the anode fluid passage and the cathode fluid passage 7 are formed in a back-to-back relationship, but it may be in any shape so far as the anode fluid can be supplied to the anode and also the cathode fluid can be supplied to the cathode.

The external manifold 2 will be described with reference to Figs. 2 to 6.

As shown in Fig. 2, the external manifold 2 has a top plate 12 and a bottom plate 13. A passage space for hydrogen is formed between an inner face of the top plate 12 and an upper face of the bottom plate 13. A partition plate 14 is provided between the top plate 12 and the bottom plate 13, and the hydrogen passage space is divided into a first space 15 on the top plate 12 side and a second space 16 on the bottom plate 13 side by the partition plate 14.

As shown in Fig. 3, a recess 21 for forming the passage space is formed in the inner face of the top plate 12, and an introduction port 22 for introducing hydrogen is provided in the top plate 12. A fuel supply unit, not shown, is connected to the introduction port 22. As shown in Figs. 2 and 4, a communication port 23 as a second introduction port is provided at substantially the center part of the partition plate 14. The location of the communication port 23 is formed to be at a different location from a projection portion 22a of the introduction port 22 with respect to the stacking direction. The flow passage area of the communication port 23 is formed to be greater than the flow passage area of the introduction port 22.

As shown in Figs. 2 and 5, hydrogen is supplied to the upper face of the bottom plate 13 through the communication port 23 of the partition plate 14. The supplied hydrogen is brought into contact with the upper face of the bottom plate 13 at a projected portion 23a (second projected portion) of the communication port 23 with respect to the stacking direction, and is supplied to the second space 16. A plurality of small-openings 24 that are directed to the anode fluid passage of the cell unit 11 (see Fig. 1) are formed (12 small-openings are formed in the example shown in the figure) in the upper face of the bottom plate 13. The small-openings 24 are formed on the same circumference S having the projected portion 23a as its center so that, for example, one of the small-openings is allocated to a respective one of the cell units 11 (see Fig. 1). In other words, 12 small-openings are disposed at regular intervals with respect to the vertical direction of Fig. 5 and mutually horizontally with respect to the horizontal direction in the figure.

In the above-described external manifold 2, hydrogen is sent from the introduction port 22 to the first space 15 and is diffused in the first space 15 in plane directions (first buffer section). The hydrogen diffused and decelerated in the first space 15 is caused to hit against the upper face (the projected portion 23a) of the bottom plate 13 from the communication port 23, which has a large flow passage area, and is sent to the second space 16 so that it is diffused horizontally radially (second buffer section).

The hydrogen from the communication port 23 is allowed to diffuse easily along horizontal directions because it hits against the upper face of the bottom plate 13. Moreover, the hydrogen flowing into the second buffer section diffuses more easily than the hydrogen supplied into the first buffer section because the flow passage area of the communication port 23 is made large.

The hydrogen diffused radially on the upper face of the bottom plate 13 and decelerated is diffused in the manner shown by the arrows in Fig. 6, and is distributed to the small-openings 24 uniformly. The hydrogen distributed to the small-openings 24 uniformly flows downward from the small-openings 24, and it is supplied to the anode fluid passage of the cell unit 11 (see Fig. 1).

Thus, in the fuel cell 1, in which hydrogen is supplied to the cell stack 3 through the external manifold 2, the hydrogen supplied from the introduction port 22 is diffused in the first buffer section and thereafter, further diffused radially in the second buffer section so that the flow rate is made uniform, and is sent to the small-openings 24. Therefore, without increasing the size of the manifold by, for example, providing a large diffusion space, in other words, even when the size of the manifold is reduced, hydrogen can be supplied to each of the cell units 11 evenly.

In the above-described embodiment, the partition plate 14 is provided so that the hydrogen passage space formed by the top plate 12 and the bottom plate 13 is divided into the first space 15 and the second space 16. It should be noted, however, that it is also possible to employ a configuration in which the partition plate 14 is not provided. In this case, the location of the introduction port 22 is set at a location corresponding substantially to the center of the bottom plate 13 (substantially the center location of the circumference S). The hydrogen from the introduction port 22 is brought into contact with the projected portion of the introduction port 22 so as to reduce the flow rate, and the hydrogen is diffused radially. Then, the hydrogen is sent to the small-openings 24.

In this case, it is also possible to widen the flow communication area of the introduction port 22. In addition, it is also possible that the introduction port 22 may have such a shape that its flow passage area gradually increases along the passage direction of the introduction port 22 from the inlet toward the outlet, because it is more preferable when the size of the introduction port 22 is smaller in relation to externally connected devices.

### (Second Embodiment)

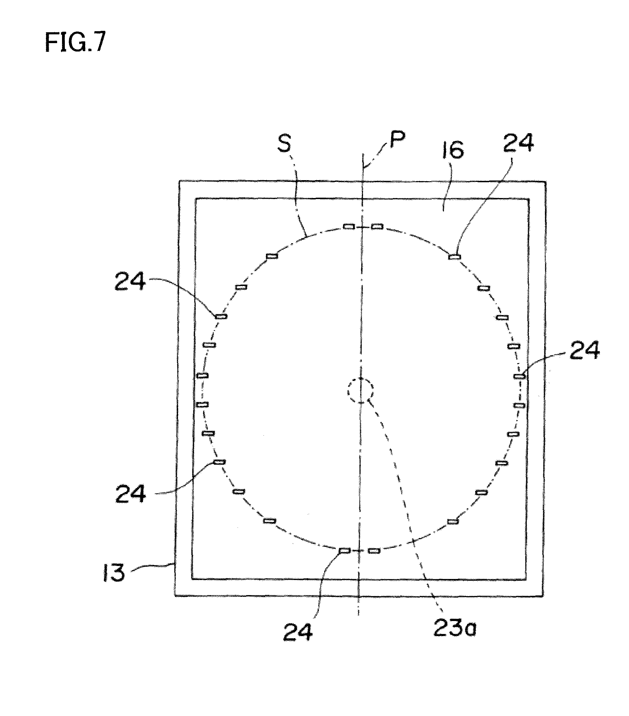

A second embodiment is described with reference to Fig. 7.

Fig. 7 shows the external appearance of an inner face of a bottom plate of an external manifold according to a second embodiment of the invention. It should be noted that the components other than a bottom plate 13 are the same as those in the first embodiment.

As shown in the figure, 24 small-openings 24 that are directed to the anode fluid passage of the cell unit 11 (see Fig. 1) are formed in the upper face of the bottom plate 13. The small-openings 24 are formed on the same circumference S having the projected portion 23a as its center so that a set of two small-openings is allocated to a respective one of the cell units 11 (see Fig. 1). In other words, 12 small-openings 24 are formed in each side of the bottom plate 13 across the center line P (the vertical direction in the figure) of the bottom plate 13, and the 12 small-openings 24 are formed in line symmetry with respect to the center line P and in point symmetry with respect to the projected portion 23a. As a result, hydrogen can be distributed to the anode fluid passages of all the cell units 11 (see Fig. 1) uniformly and reliably.

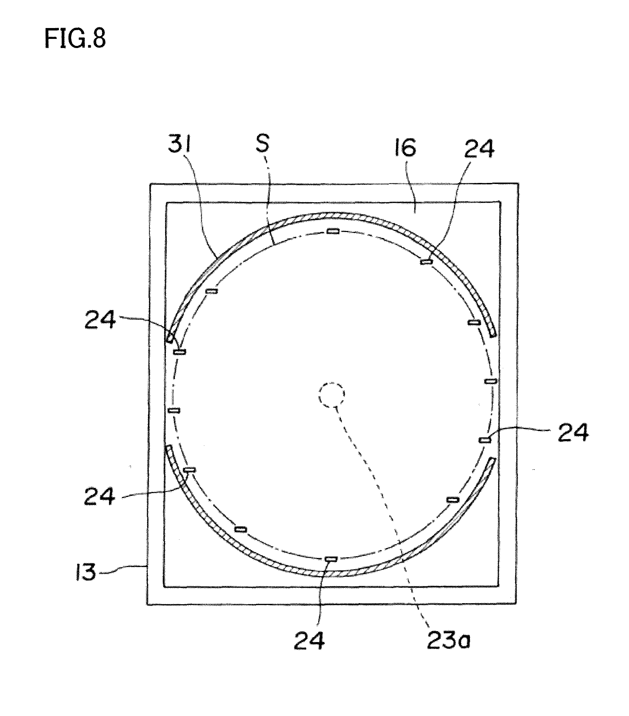

A third embodiment is described with reference to Fig. 8.

Fig. 8 shows the external appearance of an inner face of a bottom plate of an external manifold according to a third embodiment of the invention. It should be noted that the components other than a bottom plate 13 are the same as those in the first embodiment.

As shown in the figure, arc-shaped fluid blocking walls 31 extending along the aligning direction of the small-openings 24 (i.e., extending concentrically with the circumference S) are provided on the upper face of the bottom plate 13 that is outside the small-openings 24. The hydrogen that has contacted the projected portion 23a and diffused radially is inhibited from flowing outside by the fluid blocking walls 31. As a result, the supply pressure is provided sufficiently, and the hydrogen can be supplied to the small-openings 24 more reliably.

It is also possible to provide a fluid blocking wall 31 shown in Fig. 8 for the bottom plate 13 that is shown in Fig. 7.

In the foregoing embodiments, hydrogen is taken as an example of the anode fluid, but the invention may be applied to supply of other fuels such as methanol.

### INDUSTRIAL APPLICABILITY

An anode fluid can be distributed to a plurality of small-openings within a limited passage space. Therefore, the anode fluid can be supplied evenly to each of the cell units even when the size of the manifold is reduced.

## Claims

1. A fuel cell comprising: a cell in which an anode and a cathode are joined with an electrolyte membrane interposed therebetween; a cell stack in which a plurality cell units are stacked, each of the cell units comprising the cell and a separator having an anode fluid passage; and a manifold for supplying an anode fluid to a location to which the anode fluid passage of the cell unit is directed, the fuel cell being **characterized in that**:
the manifold comprises
a top plate having an introduction port for introducing the anode fluid, and
a bottom plate having a plurality of small-openings directed to the anode fluid passage, the bottom plate also having a passage space for the anode fluid formed on an upper face thereof and between the upper face thereof and an inner face of the top plate;
the small-openings are provided on a same circumference having a projected portion of the introduction port as its center; and
the anode fluid supplied from the introduction port is allowed to contact the projected portion in the upper face of the bottom plate so as to lower the flow rate, and the anode fluid whose flow rate has been lowered is allowed to diffuse in radial directions to be distributed to the small-openings.

2. The fuel cell as set forth in claim 1, **characterized in that**:
the small-openings are provided on the same circumference so that one of the small-openings corresponds to a respective one of the plurality of cell units.

3. The fuel cell as set forth in claim 2, **characterized in that**:
the small-openings are provided at regular intervals with respect to a center line of the circumference that extends in an aligning direction of the plurality of cell units and mutually across the center line.

4. The fuel cell as set forth in claim 1, **characterized in that:**
the small-openings are provided on the same circumference so that a plurality of the small-openings correspond to a respective one of the plurality of cell units.

5. The fuel cell as set forth in claim 4, **characterized in that:**
the small-openings are provided in line symmetry with respect to a center line of the circumference concerning an aligning direction of the plurality of cell units and in point symmetry with respect to a center point of the circumference, and a plurality of the small-openings are provided respectively corresponding to each one of the cell units at regular intervals with respect to the center line.

6. The fuel cell as set forth in claim 1, **characterized in that:**
a fluid blocking wall is provided in the passage space that is outside the small-openings having the projected portion as its center.

7. A fuel cell comprising: a cell in which an anode and a cathode are joined with an electrolyte membrane interposed therebetween; a cell stack in which a plurality cell units are stacked, each of the cell units comprising the cell and a separator having an anode fluid passage; and a manifold for supplying an anode fluid to a location to which the anode fluid passage of the cell unit is directed, the fuel cell being **characterized in that:**
the manifold comprises
a top plate having an introduction port for introducing the anode fluid, and
a bottom plate having a plurality of small-openings directed to the anode fluid passage, the bottom plate also having a passage space for the anode fluid formed on an upper face thereof and between the upper face thereof and an inner face of the top plate, and
a partition plate, for dividing the passage space into a first space on the top plate side and a second space on the bottom plate side, having a second introduction port at a location different from a projected portion of the introduction port;
the small-openings are provided on a same circumference having a second projected portion of the second introduction port as its center; and
the anode fluid supplied from the second introduction port is allowed to contact the second projected portion in the upper face of the bottom plate so as to lower the flow rate, and the anode fluid whose flow rate has been lowered is allowed to diffuse in radial directions to be distributed to the small-openings.

8. The fuel cell as set forth in claim 7, **characterized in that:**
a flow passage area of the second introduction port is greater than a flow passage area of the introduction port.

9. The fuel cell as set forth in claim 7, **characterized in that**:
the small-openings are provided on the same circumference so that one of the small-openings corresponds to a respective one of the plurality of cell units.

10. The fuel cell as set forth in claim 9, **characterized in that**:
the small-openings are provided at regular intervals with respect to a center line of the circumference that extends in an aligning direction of the plurality of cell units and mutually across the center line.

11. The fuel cell as set forth in claim 7, **characterized in that**:
the small-openings are provided on the same circumference so that a plurality of the small-openings correspond to a respective one of the plurality of cell units.

12. The fuel cell as set forth in claim 11, **characterized in that**:
the small-openings are provided in line symmetry with respect to a center line of the circumference concerning an aligning direction of the plurality of cell units and in point symmetry with respect to a center point of the circumference, and a plurality of the small-openings are provided respectively to each one of the cell units at regular intervals with respect to the center line.

13. The fuel cell as set forth in claim 7, **characterized in that**:
a fluid blocking wall is provided in the passage space that is outside the small-openings having the projected portion as its center.
